# EUROPÄISCHE PATENTSCHRIFT

(11) **EP 0 995 847 B1**
(45) Veröffentlichungstag und Bekanntmachung des Hinweises auf die Patenterteilung: **16.07.2003**
(21) Anmeldenummer: 99120514.7
(22) Anmeldetag: 15.10.1999
(51) Int. Cl.: E03F 5/04

(54) **Ablauf, insbesondere Decken- oder Bodenablauf**
Drain, particularly floor drain
Dispositif d'écoulement, en particulier pour plancher

(30) Priorität: 24.10.1998 DE 29818959 U; 24.10.1998 DE 29818961 U
(43) Veröffentlichungstag der Anmeldung: 26.04.2000
(73) Patentinhaber: ACO Severin Ahlmann GmbH & Co. KG, 24755 Rendsburg (DE)
(72) Erfinder: Sehr, Gerhard, 56370 Allendorf (DE)
(74) Vertreter: Bohnenberger, Johannes, Dr.

(56) Entgegenhaltungen:
- EP-A- 0 324 055
- DE-A- 4 443 873
- DE-U- 9 217 019

## Beschreibung

Die Erfindung bezieht sich auf einen Ablauf, insbesondere auf einen Decken- oder Bodenablauf, gemäß dem Oberbegriff von Anspruch 1, insbesondere ausgestattet mit oberer Zulauföffnung und mit oder ohne Seitenzulauf und einem herausnehmbaren Geruchverschluß-Einbauteil, das dichtend an der geneigt angeordneten Durchlauföffnung integriert ist und an dem außen ein in beiden Ablaufneigungen (1,5°; 90°) ausrichtbarer Ablaufstutzen ansetzbar ist.

Da das Einbauteil gleichzeitig der Verschluß für die abgehende Leitung ist, muß es herausnehmbar sein, um Verstopfungen der abgehenden Leitung beseitigen zu können. Für die Fixierung des Einbauteils vor der üblicherweise kreisrunden Durchflußöffnung gibt es verschiedene bekannte Lösungen. Dabei ist in den meisten Fällen darauf geachtet worden, daß der Kraftaufwand beim Einsetzen nicht zu groß ist und die Dichtung nicht beschädigt wird.

Der Ablauf nach der DE 88 04 881 U1 ist durch ein mit einem Flansch vor der Durchflußöffnung versehenes Einbauteil gekennzeichnet. Die Durchflußöffnung selbst weist eine leicht konische Innenringfläche auf, in die der vor dem Flansch in eine Nut eingelegte Rundschnurring eingeschoben wird. Der untere rechteckige Abschnitt des Flansches wird in eine am Gehäuseboden vor der Durchflußöffnung liegende Schlitzvertiefung gesteckt und dann oben von einem überschwenkenden Spannbügel arretiert. Bei einer anderen, aus der DE 79 32 381 U1 bekannten Bauart ist die Verspannung als Klemmbügel ausgebildet, der von vorne gegen den Flansch des Einbauteils drückt und sich mit seinen Schenkelenden auf Wandwiderlagern abstützt. Statt des Bügels kann auch eine keilförmige Klemmleiste verwendet werden, die zwischen den jetzt näher am Flansch angeordneten Widerlagern eingeschoben wird (DE 79 33 888 U1).

Den geschilderten Bauformen von Abläufen ist gemeinsam, daß die Durchflußöffnung in einer vertikalen Ebene liegt. Dadurch ist das Einsetzen des Einbauteils erschwert, weil es zum Einstecken in die Schlitzvertiefung weit von der Durchflußöffnung weggeschwenkt werden muß, damit der Dirchtring anschließend in horizontaler Richtung eingedrückt werden kann. Für das Wegschwenken ist in dem engen Ablaufgehäuse aber nicht genug Platz vorhanden. Es wurde deshalb eine andere Ablaufbauart entwickelt, bei der die Durchflußöffnung geneigt verläuft und das Einbauteil demzufolge mehr von oben aufgesteckt werden kann.

Eine Ablaufbauart, die dieses Prinzip verwirklicht, ist der DE 92 17 019 U1 zu entnehmen. Hier enthält das Einbauteil einen um weniger als 90° gekrümmten Rohrstutzen, der sich unter Einfügen einer Flachdichtung auf der etwa unter 10° zur Vertikalen geneigten Durchflußöffnung auflegt. Die Arretierung, die das Einbauteil in der Einbaulage hält, besteht aus zwei sich an den Gehäusewänden gegenüberliegenden Halbrundtaschen mit oberer Abstützschräge und einem U-förmigen Spannbügel, der mit an den Schenkelenden angebrachten Kreisexzentern in die Taschen eingeschoben und dann bis zum Einrasten in eine Klinke verschwenkt wird. Die Widerlager, die mit der Abstützschräge zusammenwirken, sind als Bolzen ausgebildet. Diese Bauart hat den entscheidenden Nachteil, daß nicht kontrolliert werden kann, ob das Einbauteil tatsächlich bis in die unterste Einbaustellung gedrückt wird. Wird der Spannbügel schon vorher umgelegt, dann wird die Dichtung beschädigt und die Dichtigkeit wird nicht erreicht.

Eine andere, aus DE 44 43 873 A1 bekannte Ablaufbauart vermeidet diesen Nachteil dadurch, daß die Durchflußöffnung wesentlich stärker geneigt ist (ca. 45° zur Vertikalen) und die Oberseite des Einbauteils unter eine von der Gehäusewand über der Öffnung vorspringende Lasche geschoben werden muß. Dadurch gelangt das Einbauteil auf jeden Fall in die richtige Einbaulage, in der sich die Flachdichtung auf die die Durchflußöffnung umgebende Ringfläche legt und der Hals des Einbauteils in die Öffnung taucht. Als Arretierung dient wiederum ein Spannbügel, der über die dem Hals gegenüberliegende obere Ecke des Einbauteils faßt und dort einrastet.

Schließlich gibt es auch noch eine Bauart, bei der das Einbauteil von oben auf die in diesem Fall horizontal liegende Durchflußöffnung gesteckt wird, die hier das innere Ende eines von der unter 45° geneigten Gehäuseöffnung nach oben gezogenen 45°-Rohrkrümmers ist (DE 85 29 243 U1). Die Arretierung des Einbauteils erfolgt durch eine kurze Drehung, durch die zwei Zungen unter zugehörige Gehäusevorsprünge gelangen. Es leuchtet ein, daß bei dieser Art des Einbaus und der Arretierung die Dichtung stark beansprucht wird und schnell verschleißt. Der Ausbau gestaltet sich schwierig, weil wegen der hohen Dichtkraft das Einbauteil auf dem Krümmer klemmt.

Bekannt sind außdem Abläufe mit oder ohne Geruchverschluß, die in ihrer Bauhöhe durch Gebäudedecken- oder -bodendicke begrenzt werden. Insbesondere bei Abläufen mit einem von oben als Einbauteil eingesetzten und lagegesicherten Geruchverschluß und anschließend aufgestecktem Aufsatz mit Zulaufteil, stehen die Anforderungen bezüglich Durchflußmenge und Geruchverschlußhöhe den durch die Gebäudedeckenoder -bodendicke vorgegebenen maximalen Bauteilabmaßen oftmals entgegen.

In der DE 36 20 182 C2 ist dieser abmessungsbedingte Nachteil beseitigt, in dem der Geruchverschluß mit einem ersten Teil seiner Höhenstreckung in den Ablaufbehälter und seinem zweiten Teil in das aufgesetzte Aufsatzstück ragt, wodurch die Bauteilhöhe des gesamten Ablaufes verringert wird.

Eine Lösung mit den hier aufgezeigten Merkmalen eines Decken- oder Bodenablaufes mit Geruchverschluß-Einbauteil ist für einen Ablauf mit geneigter Durchflußöffnung nicht einsetzbar. Ist ein Ablauf noch zusätzlich mit einem Seitenzulauf ausgestattet, erfolgt beim Auftreffen des seitlichen Flüssigkeitsstromes auf die Geruchverschlußwandung oder dem Zusammentreffen von vertikalen und horizontalen Flüssigkeitsströmen eine abrupte, nicht erwünschte Änderung der Strömungsrichtung oder eine Verwirbelung der Flüssigkeitsströme mit der negativen Folge, daß die Strömungsgeschwindigkeit und damit die Durchflußmenge stark vermindert wird.

Der Erfindung liegt die Aufgabe zugrunde, einen Decken- oder Bodenablauf mit Geruchverschluß-Einbauteil zu konzipieren, welcher ermöglicht das Einbauteil leicht in das Ablaufgehäuse ein- und auszubauen, wobei dessen Einbaulage eingehalten wird und die Dichtung unbeschädigt und langlebig bleibt, und daß trotz geringer Schub- und Zugkraft eine hohe Dichtkraft erzeugt sowie trotz vorgeschriebener Flüssigkeitsdurchlaufmenge eine gedrängte Bauweise bei Beibehaltung einer niederen Bauhöhe des Abflußgehäuses erreicht und ein Rückströmen von Gasbläschen aus der Ablaufleitung vermieden wird.

Diese Aufgabe wird mit einem Ablauf gemäß Anspruch 1 gelöst, wobei die Dichtung in die Durchflußöffnung hinein verlegt ist. Das spart Platz. Es gibt Dichtungsprofile, die bei hoher Dichtwirkung eine kleine Einbaukraft erfordern. Die Reduzierung der Schlitzvertiefung auf zwei schmale Bodentaschen bedeutet, daß die Durchflußöffnung am Boden beginnen kann. Die Taschen liegen dann in den Zwickeln und behindern die Strömung nicht. Mit dem auf der Oberseite des Einbauteils angeordneten Riegelteil wird eine Schwenkbewegung herbeigeführt, durch die die Dichtung fortschreitend von unten nach oben in die Riegelfläche eingedrückt wird.

Umgekehrt wird beim Ausbau die Dichtung auch allmählich und nicht auf den vollen Umfang herausgezogen. Das spart Kraft. Die bevorzugte Ausbildung der Dichtung mit mindestens zwei umlaufenden Lippen oder mit Sägezahnprofil bedeutet ebenfalls eine Verringerung des Kraftaufwandes bei gleichzeitiger Erhöhung der die Dichtkraft bestimmenden Flächenpressung.

Schließlich wird die geforderte Flüssigkeitsdurchlaufmenge bei geringen Gehäuseabmessungen dadurch realisiert, daß der Überlaufstutzen und die diesen übergreifende Glocke des Geruchverschluß-Einbauteils derart ausgebildet sind, daß das Wasservolumen der Wasservorlage im Geruchverschluß-Einbauteil zu dem der Wasservorlage im Ablaufgehäuse im Bereich des Geruchverschlusses ein Verhältnis von ungefähr 1 = < 1,1 aufweist. Die ovale Form der Durchflußöffnung ergibt den geforderten Durchflußquerschnitt.

Eine zweckmäßige Ausgestaltung der Erfindung ist in den Unteransprüchen angegeben.

Die Vorteile der Erfindung bestehen insbesondere darin, daß außer der Beibehaltung der niedrigen Bauhöhe des Ablaufes die Möglichkeit des Einsatzes einer geneigten Durchlauföffnung und damit ein wahlweiser Anschluß eines vertikalen oder horizontalen Ablaufstutzens am Ablaufflansch gegeben ist und daß die Strömungsgeschwindigkeit des seitlichen Flüssigkeitsstromes durch ein direktes Einleiten in die Geruchverschlußöffnung erhöht wird.

Ein Ausführungsbeispiel der Erfindung ist in der Zeichnung dargestellt und wird nachfolgend näher beschrieben. Es zeigen:
- Fig. 1: ein Ablaufgehäuse im vertikalen Längsschnitt mit zusätzlichem Seitenzulauf;

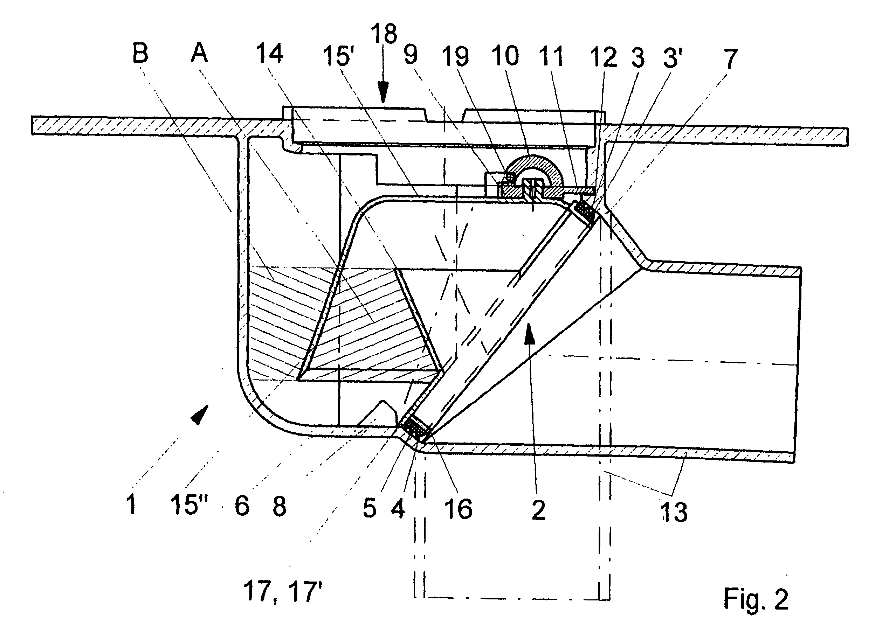

- Fig. 2: ein Ablaufgehäuse im vertikalen Längsschnitt ohne zusätzlichem Seitenzulauf.

Die Figuren zeigen ein Ablaufgehäuse 1, welches mit oberer Zulauföffnung 18 ausgestattet ist. Wahlweise ist am Flansch 7 einer geneigt angeordneten Durchlauföffnung 2 ein gängiger Ablaufrohrstutzen 13 mit einer Ablaufneigung von 1,5° bzw. 90° anschließbar. Gehäuseinnenseitig ist an der geneigt angeordneten Durchlauföffnung 2 ein Geruchverschluß-Einbauteil 14, 15', 15" dichtend angelenkt, dessen Anschlußteil in die Durchlauföffnung 2 hineinragt. Die Durchlauföffnung 2 weist eine zur Aufnahme eines gleitenden Dichtringes 4 geeignete Ringfläche 3, die in der Ansicht eine ovale Form hat, auf. Am Gehäuseboden 6 sind gehäuseinnenseitig zwei Schuhe 8 angeordnet. Anbauseitig ist am Geruchverschluß-Einbauteil 14, 15', 15" ein Hals 16 integriert, dessen Außenringfläche 3' im eingebauten Zustand mit der Ringfläche 3 des Gehäuses 1 einen ringförmigen Spalt bildet, in dem ein Dichtring 4 dichtend eingelegt ist. Dieser Dichtring 4 ist mit mindestens zwei dichtend umlaufenden Lippen 5 oder einem Sägezahnprofil ausgestattet. Weiterhin ist das Geruchverschluß-Einbauteil 14, 15', 15" mit einem vor der Durchflußöffnung 2 liegendem Flansch 17 ausgestattet, an dem in seinem unteren Bereich Rechteckvorsprünge 17' integriert. sind, die mit den Schuhen 8 des Ablaufgehäuses 1 korrespondieren.

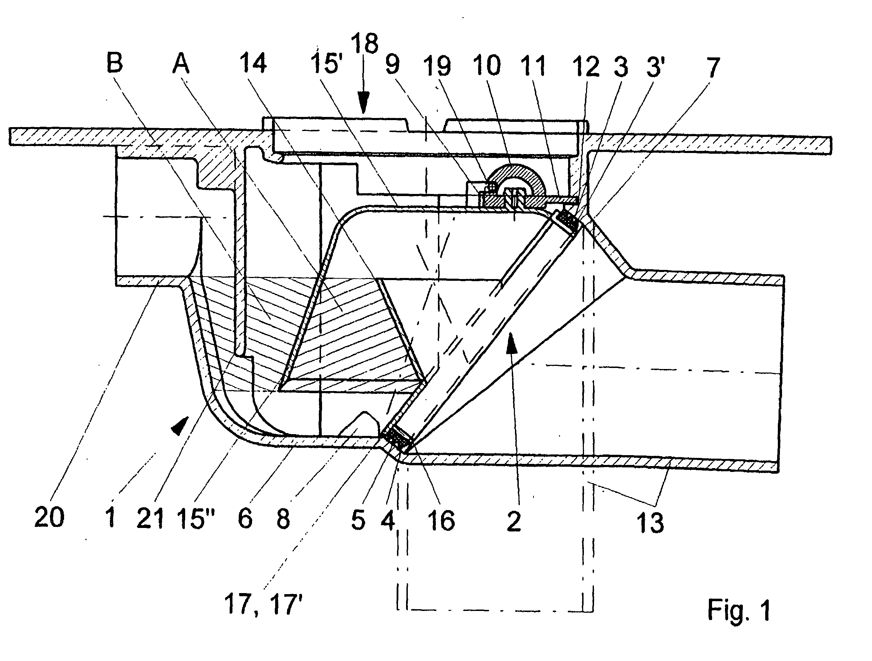

An der Oberseite des Geruchverschluß-Einbauteils 14, 15', 15" ist ein Riegelteil 9, 10, 11 angeordnet, welches als sektorförmig abgeschnittene Kreisscheibe 9 mit Drehgriff 10 und Klemmabschnitt 11 ausgebildet ist, dessen Vollkreisscheibe exzentrisch drehgelagert wird. In Arretierstellung weist das Riegelteil 9, 10, 11 eine lösbare Sperre 19 auf. Das schwenkbar gelagerte Riegelteil 9, 10, 11 greift in eine als Widerlager 12 fungierende nutenförmige Außnehmung im oberen Bereich des Ablaufgehäuses 1 ein. In der der Durchlauföffnung 2 gegenüberliegenden Wand des Ablaufgehäuses 1 kann, wie in Fig. 1 dargestellt, zusätzlich zur oberen Zulauföffnung 18 ein Seitenzulauf 20 integriert werden.

Der die Höhe der Wasservorlage A, B bestimmende Überlaufstutzen 14 des Geruchverschluß-Einbauteils 14, 15', 15" weist zum überwiegenden Teil eine Neigung auf, die zur Senkrechten entgegen der Neigung der Durchlauföffnung 2 verläuft. Die diesen Überlaufstutzen 14 übergreifende Glocke 15', 15" besteht einerseits aus einem parallel zum Gehäuseboden verlaufenden oberen Teil 15' und andererseits aus einem von der Neigungsrichtung, wie die Neigung der Durchlauföffnung 2, verlaufenden Teil 15". Die gegenseitige Neigung des Überlaufstutzens 14 zum geneigten Teil 15" der Glocke 15', 15" des Geruchverschluß-Einbauteils 14, 15', 15", ebenso deren größenmäßige Ausführung, sind derart gewählt, daß das Volumen der Wasservorlage A im Geruchverschluß-Einbauteil 14, 15', 15" zu dem der Wasservorlage B im Ablaufgehäuse 1 im Bereich des Geruchverschluß-Einbauteils 14, 15', 15" ein Verhältnis von 1 zu 1,1 (oder größer) aufweist. Dieses Verhältnis, ebenso die Neigung der Durchlauföffnung 2, die je nach Größe des Ablaufgehäuses 1 zwischen 35° und 60° ausgeführt ist, gewährleisten unabhängig davon, ob der Ablauf mit einem Ablaufrohr in vertikaler (90°) oder horizontaler (1,5°) Lage ausgebildet ist, eine Durchlaufgeschwindigkeit, die den Erfordernissen hinsichtlich der Durchlaufmenge ohne weiteres genügt und gleichzeitig eine Geruchsbelästigung durch ein Durchdringen von Gasbläschen entgegen der Ablaufrichtung verhindert.

Bei Abläufen mit Seitenzulauf 20 (Fig. 1) wird eine Tauchwand 21 vertikal derart in das Innere des Ablaufgehäuses 1 ragend integriert, daß diese den seitlichen Flüssigkeitsstrom beschleunigt unter den Geruchverschluß-Einbauteil 14, 15', 15" leitet. Dieser unter den Geruchverschluß-Einbauteil 14, 15', 15" geleitete seitliche Flüssigkeitsstrom wirkt bei gleichzeitigem Zulauf von vertikalen und horizontalen Flüssigkeitsströmen nach dem Injektorprinzip, so daß auch der vertikale Flüssigkeitsstrom beschleunigt durch das Geruchverschluß-Einbauteil 14, 15', 15" gezogen und die Durchlaufmenge insgesamt erhöht wird.

## Patentansprüche

1. Ablauf, insbesondere Decken- oder Bodenablauf, mit einem vorzugsweise mit einem oberen Anschlußflansch ausgestatteten Ablaufgehäuse (1) und mit einem über einen Dichtring an einer geneigt angeordneten Durchflussöffnung (2) fixierten, lösbaren Geruchverschluß-Einbauteil (14; 15', 15"), wobei
die geneigt angeordnete Durchflussöffnung (2) eine zum Einstecken des gleitenden Dichtrings (4) geeignete Ringfläche (3) aufweist,
die Ringfläche (3) eine in der Draufsicht ovale Form hat,
das Einbauteil (14; 15', 15") an seinem in die Ringfläche (3) eingreifenden Hals (16) eine den ovalen Dichtring (4) aufnehmende Außenringfläche (3') aufweist, und
die Oberseite des Einbauteils (14; 15', 15") mit einem in ein über der Durchflussöffnung (2) angeordnetes Widerlager (12) schwenkbaren Riegelteil (9; 10; 11) ausgestattet ist,
**dadurch gekennzeichnet, dass**
das Einbauteil (14; 15', 15") einen in Fließrichtung vor der Durchflussöffnung (2) liegenden Flansch (17) hat, an dem in seinem unteren Bereich Rechteckvorsprünge (17') integriert sind, sowie
in Fließrichtung vor der Durchflussöffnung (2) am Gehäuseboden (6) zwei die Rechteckvorsprünge (17') aufnehmende Schuhe (8) angeordnet sind.

2. Ablauf nach Anspruch 1, **dadurch gekennzeichnet, dass** das Riegelteil (9; 10; 11) als sektorförmig abgeschnittene Kreisscheibe (9) mit Drehgriff (10) und Klemmabschnitt (11) ausgebildet ist.

3. Ablauf nach Anspruch 2, **dadurch gekennzeichnet, dass** eine Vollkreisscheibe exzentrisch drehgelagert ist.

4. Ablauf nach Anspruch 2 oder 3, **dadurch gekennzeichnet, dass** für das Riegelteil (9; 10; 11) in der Arretierstellung eine lösbare Sperre (19) vorgesehen ist.

5. Ablauf nach Anspruch 1, 2 oder 3, **dadurch gekennzeichnet, dass** der Dichtring (4) mindestens zwei umlaufende Lippen (5) oder ein Sägezahnprofil aufweist.

6. Ablauf nach einem der vorhergehenden Ansprüche, **dadurch gekennzeichnet, dass** ein Überlaufstutzen (14) und eine diesen übergreifende Glocke (15', 15") des Geruchverschluß-Einbauteils (14, 15', 15") derart ausgebildet sind, dass das Wasservolumen der Wasservorlage (A) im Geruchverschluß-Einbauteil (14, 15', 15") zu dem der Wasservorlage (B) im Ablaufgehäuse (1) im Bereich des Geruchverschlusses (14, 15', 15") ein Verhältnis von ungefähr 1 =< 1,1 aufweist.

7. Ablauf nach Anspruch 6, **dadurch gekennzeichnet, dass** eine obere Zulauföffnung (18) mit oder ohne Seitenzulauf (20) vorgesehen ist.

8. Ablauf nach Anspruch 6 oder 7, **dadurch gekennzeichnet, dass** an dem herausnehmbaren, dichtend an der geneigt angeordneten Durchlauföffnung (2) integrierten Geruchverschluß-Einbauteil (14, 15', 15") außen ein in beiden Ablaufneigungen (1,5°; 90°) ausrichtbarer Ablaufstutzen (13) ansetzbar ist.

9. Ablauf nach einem der Ansprüche 6 bis 8, **dadurch gekennzeichnet, dass** der Überlaufstutzen (14) in seinem überwiegenden Teil eine Neigung aufweist, die zur Senkrechten entgegen, während die Glocke (15', 15") in ihrem nicht annähernd parallel zum Gehäuseboden (6) verlaufenden, geneigten Teil (15") neigungsrichtungsmäßig gleich der Neigung der Durchlauföffnung (2) verläuft.

10. Ablauf nach einem der Ansprüche 6 bis 9, **dadurch gekennzeichnet, dass** die Neigung der Durchlauföffnung (2) zwischen 35° und 60° liegt.

11. Ablauf nach einem der Ansprüche 6 bis 10, **dadurch gekennzeichnet, dass** vor dem gegenüber der Durchlauföffnung (2) integrierten Seitenzulauf (20) eine zustromregulierende Tauchwand (21) angeordnet ist.

## Claims

1. A drain, in particular a ceiling or floor drain, having a drain housing (1) preferably provided with an upper connecting flange, and having a detachable odour-trap fitting (14;15',15") which is secured via a sealing ring to an inclined flow opening (2), wherein
the inclined flow opening (2) has an annular surface (3) suitable for the insertion of the sliding sealing ring (4),
the annular surface (3) is of oval shape in plan view,
the fitting (14;15',15") has on its collar (16) engaging in the annular surface (3) an outer annular surface (3') receiving the oval sealing ring (4), and
the upper side of the fitting (14;15',15") is provided with a locking member (9;10;11) which is pivotable in an abutment (12) disposed over the flow opening (2),
**characterised in that**
the fitting (14;15',15") has a flange which is disposed upstream of the flow opening (2) in the flow direction and in which rectangular projections (17') are integrated in its lower region, as well as
in the flow direction upstream of the flow opening (2) on the housing bottom (6) two shoes (8) accommodating the rectangular projections (17').

2. A drain according to Claim 1, **characterised in that** the locking member (9;10;11) is in the form of a circular disc (9) cut off in the shape of a sector, with a rotary knob (10) and a clamping portion (11).

3. A drain according to Claim 2, **characterised in that** a solid circular disc is rotatably mounted eccentrically.

4. A drain according to Claim 2 or 3, **characterised in that** in the locating position a releasable blocking means (19) is provided for the locking member (9;10;11)

5. A drain according to Claim 1,2 or 3, **characterised in that** the sealing ring (4) has at least two circumferential lips (5) or a sawtooth profile.

6. A drain according to any one of the preceding Claims, **characterised in that** an overflow connector (14) and a bell (15,15') of the odour-trap fitting (14;15',15") overlapping it are so formed that the volume of water of the water seal (A) in the odour-trap fitting (14;15',15") has a ratio of approximately 1 = <1.1 in relation to that of the water seal (B) in the drain housing (1) in the vicinity of the odour-trap (14;15',15").

7. A drain according to Claim 6, **characterised in that**, an upper inlet opening (18) is provided with or without a side inlet (20).

8. A drain according to Claim 6 or 7, **characterised in that** a drain connector (13), which can be aligned at both drain inclinations (1.5°;90°), can be fitted externally and fluidtightly to the removable odour-trap fitting (14;15',15") integrated in the inclined flow opening (2).

9. A drain according to any one of Claims 6 to 8, **characterised in that** over its greater part the overflow connector (14) has an inclination which extends contrary to the vertical, whereas the bell (15',15"), in its portion (15") not extending approximately parallel to the housing bottom (6), extends in respect of its direction of inclination at the same inclination as the flow opening (2).

10. A drain according to any one of Claims 6 to 9, **characterised in that** the inclination of the flow opening (2) is between 35° and 60°.

11. A drain according to any one of Claims 6 to 10, **characterised in that** a submerged wall (21) regulating the inflow is mounted upstream of the side inlet (20) integrated with respect to the flow opening (2).

## Revendications

1. Dispositif d'écoulement, en particulier pour plancher ou pour sol, présentant un corps d'écoulement (1) de préférence équipé d'une bride de raccordement supérieure et un insert-siphon (14 ; 15', 15") démontable, fixé via un anneau d'étanchéité à un orifice d'écoulement (2) disposé incliné, dans lequel
l'orifice d'écoulement (2) disposé incliné présente une surface annulaire (3) appropriée pour insérer l'anneau d'étanchéité (4) glissant,
la surface annulaire (3), vue en plan de dessus, a une forme ovale,
l'insert (14 ; 15', 15") présente, à son col (16) venant en prise dans la surface annulaire (3), une surface annulaire extérieure (3') recevant l'anneau d'étanchéité ovale (4) et
le côté supérieur de l'insert (14 ; 15', 15") est équipé d'une pièce de verrouillage (9 ; 10 ; 11) capable de pivoter dans une butée (12) disposée au-dessus de l'orifice d'écoulement (2),
**caractérisé en ce que**
l'insert (14 ; 15', 15") présente une bride (17) située en amont de l'orifice d'écoulement (2) dans le sens d'écoulement, à laquelle sont intégrées des saillies rectangulaires (17') dans sa zone inférieure, et **en ce que**
deux sabots (8) recevant les saillies rectangulaires (17') sont disposés en amont de l'orifice d'écoulement (2) dans le sens d'écoulement.

2. Dispositif d'écoulement selon la revendication 1, **caractérisé en ce que** la pièce de verrouillage (9 ; 10 ; 11) est réalisée en tant que rondelle circulaire (9) coupée en forme de secteur avec poignée de rotation (10) et section de serrage (11).

3. Dispositif d'écoulement selon la revendication 2, **caractérisé en ce qu'**une rondelle circulaire complète est montée en rotation de manière excentrique.

4. Dispositif d'écoulement selon la revendication 2 ou 3, **caractérisé en ce qu'**un blocage déverrouillable (19) est prévu pour la pièce de verrouillage (9 ; 10 ; 11) dans la position de blocage.

5. Dispositif d'écoulement selon la revendication 1, 2 ou 3, **caractérisé en ce que** l'anneau d'étanchéité (4) présente au moins deux lèvres périphériques (5) ou un profil en dent de scie.

6. Dispositif d'écoulement selon l'une des revendications précédentes, **caractérisé en ce qu'**une goulotte de trop-plein (14) et une cloche (15', 15") de l'insert-siphon (14, 15', 15") recouvrant celle-ci sont réalisées de telle façon que le volume d'eau de la réserve d'eau (A) contenue dans l'insert-siphon (14, 15', 15") présente un rapport d'environ 1 =< 1,1 à la réserve d'eau (B) dans le corps du dispositif d'écoulement (1) dans la zone du siphon (14, 15', 15").

7. Dispositif d'écoulement selon la revendication 6, **caractérisé en ce qu'**un orifice d'arrivée (18) supérieur est prévu avec ou sans arrivée latérale (20).

8. Dispositif d'écoulement selon la revendication 6 ou 7, **caractérisé en ce qu'**une goulotte d'écoulement (13) orientable dans les deux inclinaisons d'écoulement (1,5° ; 90°) peut être appliquée extérieurement à l'insert-siphon (14, 15', 15") démontable, intégré de manière étanche sur l'orifice d'écoulement (2) disposé incliné.

9. Dispositif d'écoulement selon l'une des revendications 6 à 8, **caractérisé en ce que** la goulotte de trop-plein (14) présente dans sa majeure partie une inclinaison qui s'étend par rapport à la verticale à l'opposé, tandis que la cloche (15', 15") s'étend dans sa partie inclinée (15") qui n'est pas approximativement parallèle au fond du corps (6) dans le même sens d'inclinaison que l'inclinaison de l'orifice d'écoulement (2).

10. Dispositif d'écoulement selon l'une des revendications 6 à 9, **caractérisé en ce que** l'inclinaison de l'orifice d'écoulement (2) est comprise entre 35° et 60°.

11. Dispositif d'écoulement selon l'une des revendications 6 à 10, **caractérisé en ce qu'**une paroi immergée (21) régulatrice de débit est disposée en amont de l'arrivée latérale (20) intégrée en regard de l'orifice d'écoulement.
